# EUROPEAN PATENT APPLICATION

(11) **EP 4 706 894 A1**
(43) Date of publication of application: **11.03.2026**
(21) Application number: 24905148.3
(22) Date of filing: 11.09.2024
(51) Int. Cl.: B25J 9/00, A61H 1/02

(54) **WEARABLE ACTIVE POWER ASSIST DEVICE FOR UPPER LIMBS**

(30) Priority: 13.07.2024 CN 202410938509
(71) Applicant: Ulsrobotics Co., Ltd., Shanghai 200082 (CN)
(72) Inventor: XU, Zhenhua, Shanghai 200082 (CN); WANG, Xin, Shanghai 200082 (CN); ZHANG, Haokun, Shanghai 200082 (CN)
(74) Representative: Ullrich & Naumann PartG mbB
(86) International application number: PCT/CN2024/118165
(87) International publication number: WO 2026/016278

(57) **Abstract**

The present application relates to the technical field of active assistive robotic exoskeletons, in particular discloses a wearable active powered upper-limb assistive device including a torso exoskeletal frame configured to be worn by an operator and a waist bag for the operator to wear around a waist, where the torso exoskeletal frame is connected with an upper support arm, the upper support arm is flexibly connected to the torso exoskeletal frame, an upper-limb linkage assembly is connected between the waist bag and the upper support arm, and the upper support arm is further drivingly coupled to an assistive lifting linkage assembly. The flexible connection structure is used to replace the original rotary shaft coupling of the upper support arm and the torso exoskeletal frame, and the upper-limb linkage assembly is used to support the upper support arm and the assistive lifting linkage assembly, the assistive lifting linkage assembly is used to increase a lifting moment arm of the active assistive device, so as to comprehensively improve the auxiliary operation effect of the active assistive device, reduce the operation discomfort, improve the operation efficiency, while reducing the occurrence of safety accidents and lumbar muscle strain and other health problems.

## Description

### TECHNICAL FIELD

The present application relates to the technical field of powered assistive robotic exoskeleton, and more particularly, to a wearable active powered upper-limb assistive device.

### BACKGROUND ART

At present, active assistive devices have been gradually applied in some work scenes in fields such as logistics warehousing and industrial manufacturing. The active assistive devices assist users in completing operations through source-equipped wearable robotic exoskeletons, so as to reduce operator fatigue during task execution, mitigate work-related muscle injuries, reduce operational accidents, and improve work efficiency.

According to different enhanced limb parts, the active assistive devices may be divided into active upper-limb assistive devices, active lower-limb assistive devices, and active comprehensive assistive devices covering the whole body. The active upper-limb assistive device is a mechanical structure worn on an operator's torso and upper-limbs, mainly used for enhancing upper-limb functions of the operator.

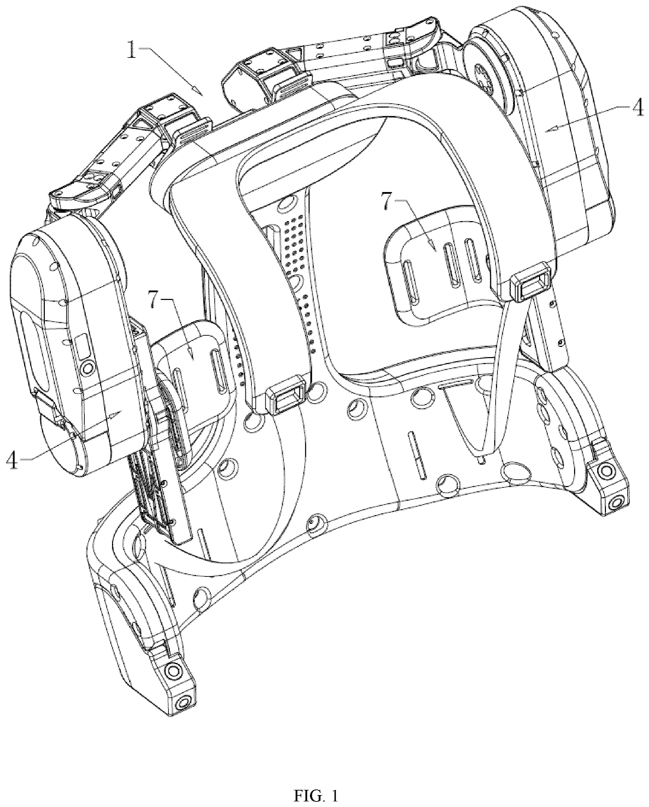

Referring to FIG. 1, FIG. 1 is a schematic diagram showing an overall structure of an active upper-limb assistive robot device. In the related art shown in FIG. 1, the active upper-limb assistive robot device includes a wearable torso exoskeletal frame 1. Left and right sides of the torso exoskeletal frame 1 are each rotatably connected with an upper support arm 4 through a connecting bracket structure and a pivot structure. Each upper support arm 4 includes a drive source including a housing, a motor, a transmission assembly and the like, and a hand support structure 7 that is driven by the drive source and for supporting two arms of a user.

Although the above related art may assist the user during operation, the connection manner between the upper support arm and the torso exoskeletal frame only allows rotation of the upper support arm along an opening and closing direction of the arms, resulting in relatively "stiff" movements when the user performs tasks while wearing the active assistive device. In addition, a lifting moment arm of the active assistive device is relatively short, and an output torque of the active assistive device is relatively small, resulting in an unsatisfactory assistive support. The active assistive device in the above related art provides unsatisfactory assistance during operation, and to some extent, it even exacerbates the user's ergonomic discomfort, limits the frequency and duration of use, thereby affecting operational efficiency while also increasing the risk of safety accidents or health issues such as lumbar muscle strain.

### SUMMARY

**In** order to improve the assistive performance of the active assistive device, reduce the user's ergonomic discomfort, improve operational efficiency, and simultaneously mitigate the occurrence of safety incidents and health issues such as lumbar muscle strain, the present application provides a wearable active powered upper-limb assistive device.

The wearable active powered upper-limb assistive device provided in the present application adopts the following technical solution:

A wearable active powered upper-limb assistive device includes a torso exoskeletal frame configured to be worn by an operator and a waist bag for the operator to wear around a waist, where the torso exoskeletal frame is connected with an upper support arm, the upper support arm is flexibly connected to the torso exoskeletal frame, an upper-limb linkage assembly is connected between the waist bag and the upper support arm, and the upper support arm is further drivingly coupled to an assistive lifting linkage assembly.

By adopting the above-mentioned technical solution, the flexible connection structure is used to replace the original rotary shaft coupling of the upper support arm and the torso exoskeletal frame, so as to significantly improve the movement flexibility of the operator when wearing the active assistive device during operation. The upper-limb linkage assembly is used to support the upper support arm, which further improves the action stability of the upper support arm based on the application of the flexible connection structure during operation, and also provides a more stable supporting assistive for the operator. The assistive lifting linkage assembly is used to support two arms of the operator while increasing a lifting moment arm of the active assistive device, so as to increase the output torque of the active assistive device, thereby comprehensively improving the auxiliary operation effect of the active assistive device, reducing the operation discomfort, improving the operation efficiency, while reducing the occurrence of safety accidents and lumbar muscle strain and other health problems.

Preferably, a drivingly coupling position of the assistive lifting linkage assembly and the upper support arm is adjacent to a flexible connection position of the upper support arm and the torso exoskeletal frame.

By adopting the above-mentioned technical solution, the assistive lifting linkage assembly is moved up, so as to adjust the position of the assistive lifting linkage assembly while satisfying the design requirements of increasing the lifting moment arm of the active assistive device and improving the output torque of the active assistive device, so as to enhance adaptability to diverse upper-limb dimensions while further improving operational convenience and flexibility and support-assist effectiveness during use, and thus reducing user fatigue sensations.

Preferably, a support-assist magnitude generated by the upper support arm driving the assistive lifting linkage assembly is adjustable.

By adopting the above-mentioned technical solution, a multi-grade adjustment of the assist magnitude may be achieved, so as to accommodate different operational scenarios with varying force requirements while improving the operational convenience.

Preferably, the upper-limb linkage assembly is fixedly connected to the upper support arm to support the upper support arm, and the upper-limb linkage assembly is articulated with the waist bag.

By adopting the above-mentioned technical solution, the operator obtains both stable and effective support assistance from the upper support arm and the assistive lifting linkage assembly during wearing and taking off the active assistive device and working with the active assistive device, while simultaneously achieving enhanced operational flexibility, adaptability and operational comfort.

Preferably, the upper-limb linkage assembly is designed as a telescoping rod assembly with adjustable length.

By adopting the above-mentioned technical solution, the user may flexibly adjust the length of the upper-limb linkage assembly according to the work pattern, physical parameters and operational scenario, thereby containing better practicability and adaptability.

Preferably, the waist bag includes a flexible lumbar plate and a rigid lumbar plate, where an elastic drawstring extends through the flexible lumbar plate and the rigid lumbar plate, and the elastic drawstring is provided with a stop mechanism for preventing the drawstring from rebounding to a natural state.

By adopting the above-mentioned technical solution, the flexible lumbar plate and the drawstring cooperate with each other to clinch the waist bag around the waist to the user's waist. By tensioning the drawstring and locks the same via the stop mechanism, stable and robust pack retention of the waist bag may be achieved, thereby indirectly improving the support-assistive stability of the upper-limb linkage assembly. Furthermore, the structure of the waist bag is simple and easy to implement. On this basis, the flexible lumbar plate and the rigid lumbar plate are introduced to balance dual requirements of wearing firmness and ergonomic comfort of the waist bag.

Preferably, a mounting plate is detachably connected to the rigid lumbar plate, where the elastic drawstring extends through the mounting plate, a mounting head is detachably connected to the mounting plate, and the upper-limb linkage assembly is articulated with the mounting head.

By adopting the above-mentioned technical solution, an integrated yet detachable connection system between the upper-limb linkage assembly and the waist bag achieve is achieve, which is convenient for assembly, disassembly, reparation and maintenance while actualizing modular design principles. Additionally, users may interchange components of different specifications according to actual operational scenarios or functional requirements.

Preferably, the stop mechanism is designed as a lock connected to the elastic drawstring, where the mounting plate is configured to prevent the stop mechanism from moving along with the elastic drawstring when the stop mechanism limits the rebound of the elastic drawstring.

By adopting the above-mentioned technical solution, a lock is used as the stop mechanism, which has better versatility, and the stop mechanism cooperates with the mounting plate to restrict the drawstring's displacement, which has better economic efficiency and practicality compared with the complicated locking mechanism alternatives.

Preferably, a plurality of clamp plates are detachably connected to the rigid lumbar plate, where the plurality of clamp plates cooperate with each other, so that the elastic drawstring extends through the plurality of clamp plates.

By adopting the above-mentioned technical solution, the plurality of clamp plates cooperate with each other to stabilize the clinching drawstring's routing path through the flexible lumbar plate while improving the clinching performance of the drawstring on the waist bag.

Preferably, the waist bag further includes a waist buckle assembly, where the waist buckle assembly includes a tie connected to the rigid lumbar plate and a latch configured for connecting the tie.

By adopting the above-mentioned technical solution, it is convenient for the user to wear the waist bag while further enhancing its retention security during use.

Preferably, a flexible plate module is connected to the upper support arm and the torso exoskeletal frame, where the flexible plate module includes an arc-shaped plate, the arc-shaped plate is elastically bendable under an external force, a natural bending orientation of the arc-shaped plate is an opening and closing direction of the upper support arm, an end of the arc-shaped plate along its curvature is connected to the torso exoskeletal frame, and the other end of the arc-shaped plate along its curvature is connected to the upper support arm.

By adopting the above-mentioned technical solution, the arc-shaped plate in the flexible plate module may meet the fundamental design requirements for the opening and closing motion of the upper support arm, while simultaneously permitting off-axis angular variation within a defined range, thereby significantly improving operational flexibility and adaptability of the active assistive device.

Preferably, a holding component is detachably connected to the torso exoskeletal frame, where the holding component is configured to press and fix the arc-shaped plate against the torso exoskeletal frame.

By adopting the above-mentioned technical solution, it is possible to realize the stable connection between the arc-shaped plate in the flexible plate module and the torso exoskeletal frame, and facilitate the assembly, disassembly, and subsequent maintenance and repair work.

Preferably, an adapter is detachably connected to the upper support arm, where the adapter includes a first adapter plate detachably connected to the upper support arm and a second adapter plate detachably connected to the arc-shaped plate, and the first adapter plate is angled to the second adapter plate.

By adopting the above-mentioned technical solution, in addition to realizing the detachable connection between the arc-shaped plates in the flexible plate module and the upper support arm, so as to facilitate assembly, disassembly, as well as maintenance and repair word, it is also possible to provide a suitable installation allowance or installation space for the flexible plate module to be connected to the upper support arm and the torso exoskeletal frame.

Preferably, the flexible plate module further includes a straight plate, where the straight plate is connected to the torso exoskeletal frame and is integrally formed on an inner curved surface of the arc-shaped plate.

By adopting the above-mentioned technical solution, the flexible plate module integrally formed from the arc-shaped plate and the straight plate, so as to satisfy the requirements for improved operational flexibility and adaptability of the upper support arm may also be met. Additionally, the functionalities of limiting, auxiliary load bearing and stabilization of the flexible connection may also be achieved.

Preferably, the upper-limb linkage assembly includes a main rod, where an insertion rod is inserted into the main rod, the insertion rod is articulated with the waist bag, and the insertion rod is in an interference fit and securely connected with the main rod.

By adopting the above-mentioned technical solution, the insertion rod is utilized as an intermediate transition element connecting the main rod and the waist bag, so as to realize a multi-stage linkage configuration, which achieves a relatively flexible deployment, which may not only satisfy the design requirements of the main rod of a large size and a high strength, but also take into account the structural stability at the connection position.

In summary, the present application includes at least one of the following beneficial technical effects:

The flexible connection structure is used to replace the original rotary shaft coupling of the upper support arm and the torso exoskeletal frame, so as to significantly improve the movement flexibility of the operator when wearing the active assistive device during operation. The upper-limb linkage assembly is used to support the upper support arm, which further improves the action stability of the upper support arm based on the application of the flexible connection structure during operation, and also provides a more stable supporting assistive for the operator. The assistive lifting linkage assembly is used to support two arms of the operator while increasing a lifting moment arm of the active assistive device, so as to increase the output torque of the active assistive device, thereby comprehensively improving the auxiliary operation effect of the active assistive device, reducing the operation discomfort, improving the operation efficiency, while reducing the occurrence of safety accidents and lumbar muscle strain and other health problems.

### BRIEF DESCRIPTION OF THE DRAWINGS

FIG. 1 is a schematic diagram showing an overall structure of an active upper-limb assistive robot device in the related art;
FIG. 2 is a schematic diagram showing an overall structure of a wearable active powered upper-limb assistive device in Embodiment 1 of the present application;
FIG. 3 is a schematic diagram showing an overall structure of a wearable active powered upper-limb assistive device, mainly for illustrating a waist bag and a flexible plate module according to an embodiment of the present application;
FIG. 4 is an enlarged schematic diagram of portion A of FIG. 2;
FIG. 5 is an enlarged schematic diagram of portion B of FIG. 2;
FIG. 6 is an enlarged schematic diagram of portion C of FIG. 3;
FIG. 7 is a schematic diagram showing an overall structure of a wearable active powered upper-limb assistive device in Embodiment 2 of the present application;
FIG. 8 is a schematic partial diagram mainly showing a motion clearance in Embodiment 3 of the present application;
FIG. 9 is a schematic partial diagram mainly showing a bendable plate in Embodiment 3 of the present application;
FIG. 10 is a schematic diagram mainly showing a connection structure of an upper-limb linkage assembly and a mounting head in Embodiment 4 of the present application; and
FIG. 11 is a cross-sectional view mainly showing a connection structure of an upper-limb linkage assembly and a mounting head in Embodiment 4 of the present application.

Description of reference numerals: 1. torso exoskeletal frame; 11. back plate; 12. carrier; 13. harness; 131. front strap module; 132. rear strap module; 2. waist bag; 21. flexible lumbar plate; 22. rigid lumbar plate; 221. posterior lumbar plate; 222. lateral lumbar plate; 23. waist buckle assembly; 231. tie; 232. latch; 24. drawstring; 25. stop mechanism; 26. mounting plate; 27. mounting head; 28. clamp plate; 29. throughhole; 3. flexible plate module; 31. arc-shaped plate; 32. straight plate; 33. holding component; 34. adapter; 341. first adapter plate; 342. second adapter plate; 35. restrictive plate; 36. motion clearance; 37. bendable plate; 4. upper support arm; 5. upper-limb linkage assembly; 51. main rod; 52. insertion rod; 53. axle; 54. locking sleeve; 55. locking hole; 56. locking block; 57. first retaining sleeve; 58. second retaining sleeve; 6. assistive lifting linkage assembly; 7. hand support structure.

### DETAILED DESCRIPTION

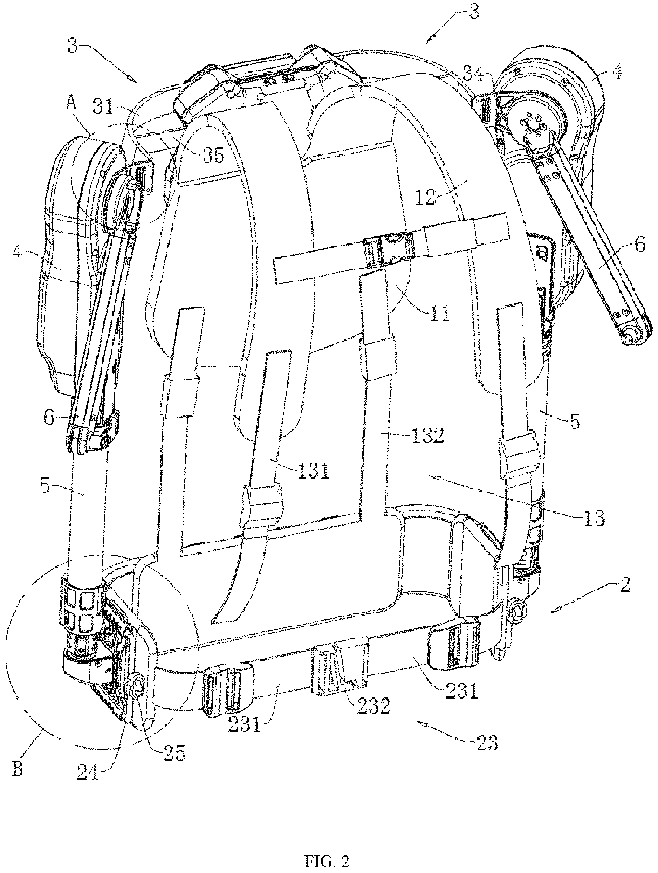

The present application is described in further detail below referring to FIGS. 2-11.

Embodiments of the present application disclose a wearable active powered upper-limb assistive device.

### Embodiment 1

With reference to FIG. 2, which is a schematic diagram showing the overall structure of the wearable active powered upper-limb assistive device in Embodiment 1 of the present application. The wearable active powered upper-limb assistive device includes a wearable torso exoskeletal frame 1 and a waist bag 2, where both the left side and right side of the torso exoskeletal frame 1 are flexibly connected to an upper support arm 4 via a flexible plate module 3. An upper-limb linkage assembly 5 is connected between the waist bag 2 and the upper support arm 4, one end of the upper-limb linkage assembly 5 is fixedly connected to the upper support arm 4, and the other end of the upper-limb linkage assembly 5 is articulated with the waist bag 2. The torso exoskeletal frame 1 is worn by an operator on his body truck with the waist bag 2 around the waist. The normal opening and closing movements of the upper support arm 4 and the adaptive angular adjustment during the operation are achieved by the flexible plate module 3, and the support assistance effect of the upper support arm 4 is further improved by the waist bag 2 and the upper-limb linkage assembly 5.

In the embodiment of the present application, the torso exoskeletal frame 1 includes a back plate 11, a bracket 12, and a harness 13 connected to the back plate 11 and the bracket 12. The back plate 11 has fixedly mounted with equipment including a housing, a controller, and a detection device. The user's shoulders and back carry both the equipment on the back plate 11 and the left/right upper support arms 4 through wearing the back plate 11 and the bracket 12. It should be noted that the harness 13 shown in FIG. 2 includes two parts, namely, a front strap module 131 and a rear strap module 132, where the front strap module 131 is shown in a hanging manner, and the front strap module 131 may be selectively fastened to the waist bag 2, the back plate 11 and even a connecting fastener on the clothes of the operator, etc. and the rear strap module 132 is directly fixedly connected to the waist bag 2 in the embodiment of the present application by locking, buckle connection, bonding, etc.

Of course, the material of the back plate 11 and the bracket 12 may be selected from a hard plate material or a soft material according to actual situations, the shape, size, etc. of the back plate 11 and the bracket 12 may also be adjusted adaptively, and the specific design of the harness 13 may also be adjusted correspondingly. For example, in other embodiments, the harness 13 may be designed to be worn around the torso, arms, etc. of the operator, or even without the harness 13, the torso exoskeletal frame 1 and the upper support arm 4 may be worn solely by the back plate 11 and the bracket 12, while the waist bag 2 is worn independently on the operator's waist and supports the upper support arm 4 independently by means of the upper-limb linkage assembly 5.

In addition, in the embodiment of the present application, the left and right upper support arms 4 are arranged symmetrically about a center line of the active assistive device, and similarly, the flexible plate module 3 and the upper-limb linkage assembly 5, which are correspondingly connected to the upper support arms 4 are also arranged symmetrically about the center line. On this basis, the designed installation position and orientation of the upper support arm 4 are adjusted, to shift the center of gravity of the active assistive device closer to the sagittal midline, so as to optimize the wearing experience and reduce ergonomic fatigue during operation.

Furthermore, in the embodiment of the present application, the upper support arm 4 is directly drivingly coupled to the assistive lifting linkage assembly 6, and the assistive lifting linkage assembly 6 is in turn connected to a hand support structure 7 or the like as shown in the related art in FIG. 1, namely, the assistive lifting linkage assembly 6 is reserved with a mounting point at the distal end away from the upper support arm 4 so as to assemble the related structure. It is, of course, also possible to use other structures which also serve to support the upper-limbs of the operator in place of the hand support structure 7 in FIG. 1, or even to support the upper-limbs of the operator directly by the assistive lifting linkage assembly 6, in which case this may be achieved by mounting rest structures at the mounting points of the assistive lifting linkage assembly 6. By incorporating the assistive lifting linkage assembly 6, and after the modeling design and verification, the rod length of the assistive lifting linkage assembly 6 is extended in a reasonable range, so that the lifting moment arm of the active assistive device is longer than that of the related technology, and an output torque of the active assistive device is enhanced without modifying existing hardware, thereby optimizing device performance, improving work efficiency, and reducing associated work costs.

On this basis, the driving coupling position and the drivingly coupling mode of the assistive lifting linkage assembly 6 are further defined. Specifically, the driving coupling position of the assistive lifting linkage assembly 6 to the upper support arm 4 is closer to the flexible connection position of the upper support arm 4 to the torso exoskeletal frame 1. The assistive lifting linkage assembly is moved up, so as to improve the upper limb and bilateral arm adaptability for the user while meeting the design requirements of increasing the lifting moment arm of the active assistive device and enhancing the output torque of the active assistive device, to elevate wearing convenience and operational flexibility and to support effectiveness during assisted tasks while reducing the user fatigue. Furthermore, the magnitude of the output force driving the assistive lifting linkage assembly 6, which is generated by the coordinated action of a driving member and a transmission mechanism in the upper support arm 4, may be adjusted, which may be achieved by means of software calculation and scenario analysis and optimization, or through force feedback and mechanical structure adjustments. The driving member and the transmission mechanism may be motors, synchronous belt pulleys, transmission gears, etc., so as to achieve multi-stage regulation of the support assist magnitude, thereby meet divergent assist-force requirements across diverse operational scenarios, and thus improving the convenience of operation.

It should also be noted that the upper-limb linkage assembly 5 and the assistive lifting linkage assembly 6 in the embodiment of the present application may both be designed as fixed-length rod structures, or may also be designed as telescoping rod assemblies with adjustable length, to achieve precision alignment with the operator's individual variations in physique, task-handling preferences, and movement patterns across diverse operational environments. The telescoping rod assembly may be a rod assembly with coaxially nested and mutually slide-locked structure, or other similar structures capable of achieving the same purpose. The upper-limb linkage assembly 5 and the assistive lifting linkage assembly 6 shown in the drawings of the embodiment of the present application are both fixed-length rod structures.

The flexible connection structure of the upper support arm 4 and the torso exoskeletal frame 1 is described in detail below:

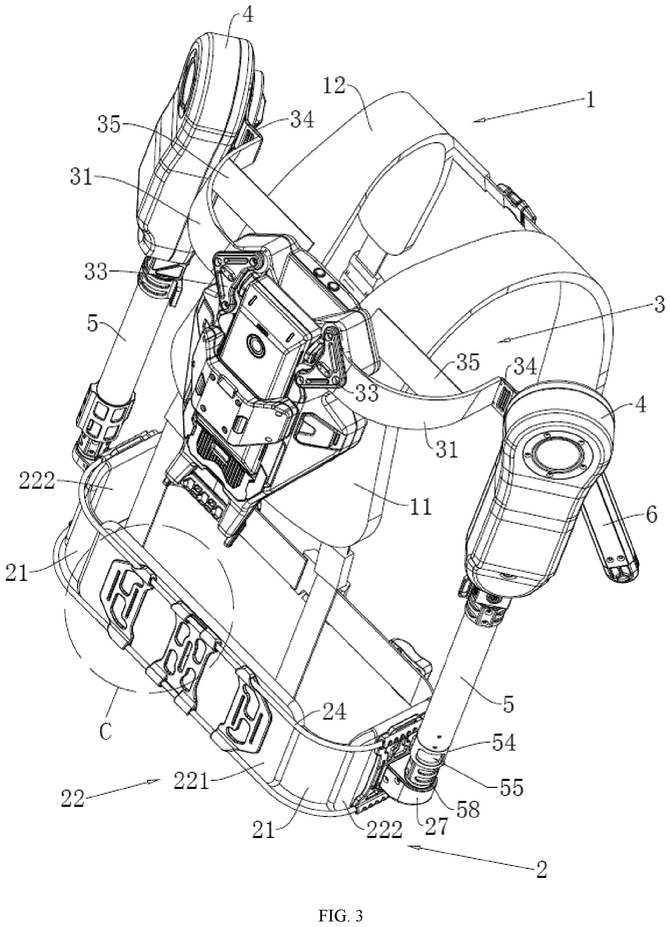

As shown in conjunction with FIGS. 2 and 3, FIG. 3 is a schematic diagram showing an overall structure of a wearable active powered upper-limb assistive device mainly for illustrating a waist bag and a flexible plate module structure. In the embodiment of the present application, the flexible plate module 3 comprises an arc-shaped plate 31, the arc-shaped plate 31 is made of PU plastic, and the arc-shaped plate 31 exhibits a curved configuration in an unstressed native state with its natural bending orientation aligned with the opening and closing direction of the upper support arm 4. One end of the arc-shaped plate 31 along its curvature is in a locked connection with the torso exoskeletal frame 1, and the other end of the arc-shaped plate 31 along its curvature is in a locked connection with the end of the upper support arm 4 close to the torso exoskeletal frame 1, so as to satisfy the kinematic specification for the opening and closing action of the upper support arm 4 after the arc-shaped plate 31 is connected to the torso exoskeletal frame 1 and the upper support arm 4. Furthermore, owing to the intrinsic elastic bending deformation characteristic, elastic deformation in other angles and directions may be achieved, which may significantly improve the flexibility and adaptability of the user when wearing the active assistive device.

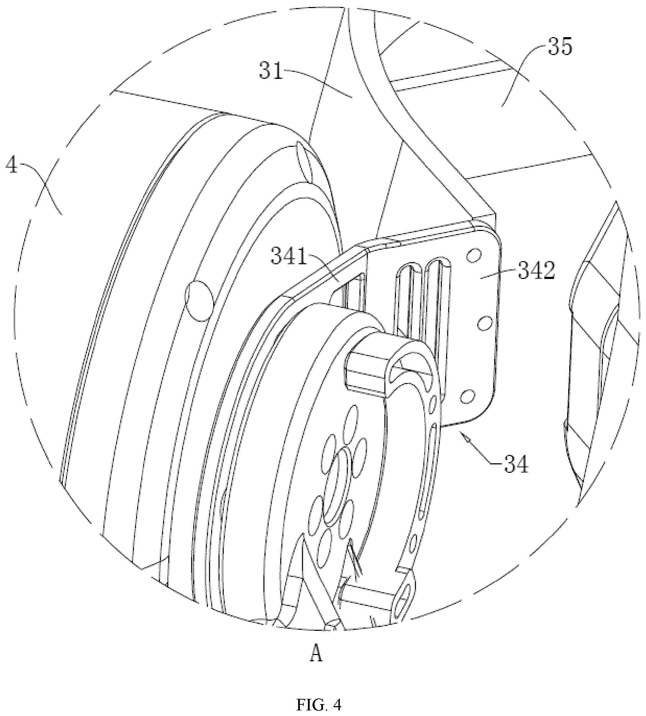

Specifically, referring to FIGS. 2 and 4, FIG. 4 is an enlarged schematic diagram of portion A of FIG. 2. The arc-shaped plate 31 is in a locked connection with the back plate 11 of the torso exoskeletal frame 1 by means of a holding component 33, while the arc-shaped plate 31 is in a locked connection with the housing of the upper support arm 4 by means of an adapter 34. In the embodiment of the present application, the holding component 33 is configured as an approximately triangular metal plate or a triangular composite plate, and the holding component 33 presses the end of the arc-shaped plate 31 against the housing on the back plate 11 and locks the same by means of screws. It is also possible to directly press and lock the end of the arc-shaped plate 31 against the back plate 11. In addition, the adapter 34 is configured as a bent metal plate or a bent composite plate, and specifically includes a first adapter plate 341 and a second adapter plate 342 which are integrally formed, where the first adapter plate 341 is sleeved on an outer shell of an output shaft of the upper support arm 4 and is locked on the housing of the upper support arm 4, and an end of the second adapter plate 342 away from the first adapter plate 341 is in a locked connection with an end of the arc-shaped plate 31 away from the torso exoskeletal frame 1 by means of screws.

It should be noted that the first adapter plate 341 is angled to the second adapter plate 342, and the included angle is designed dependent on a torsional design angle of the upper support arm 4, and the torsional design angle of the upper support arm 4 depends on an initial angle design of the assistive lifting linkage assembly 6. The design of the included angle is optimized so as to improve the support effect during support assistance and reduce the user fatigue during operation.

On this basis, in conjunction with FIGS. 2 and 3, a restrictive plate 35 is further introduced into the present embodiment, the restrictive plate 35 is of a hard plate structure, the restrictive plate 35 is fixedly mounted on the bracket 12 and extends horizontally, and an end of the restrictive plate 35 away from the bracket 12 may abut against a curved inner side surface of the arc-shaped plate 31, so as to prevent the arc-shaped plate 31 from bending excessively inwards.

The structure of the waist bag 2 itself and the connection structure between the upper-limb linkage assembly 5 and the waist bag 2 are described in detail below.

As shown in FIGS. 2 and 3, in the embodiment of the present application, the waist bag 2 includes a flexible lumbar plate 21 and a rigid lumbar plate 22, the flexible lumbar plate 21 and the rigid lumbar plate 22 are in a serially interleaved arrangement, i.e., two ends of the flexible lumbar plate 21 in the length direction are respectively connected to the corresponding rigid lumbar plates 22. Moreover, the flexible lumbar plate 21 is an arc-shaped flexible plate which may be elastically deformed in the bending direction of the arc-shape, and the material thereof may also be a PU plastic plate, it may also be made by machining other panels which is elastically deformable. The rigid lumbar plate 22 is a rectangular plate made by machining a rigid material, such as an aluminum alloy composite plate, a steel panel, etc.

Specifically, with reference to FIG. 3, the two flexible lumbar plates 21 in the embodiment of the present application are located at two corners on the rear side of the waist bag 2, the ends of the two flexible lumbar plates 21 facing each other are fixedly connected to a same one rigid lumbar plate 22, this rigid lumbar plate 22 is further named as a posterior lumbar plate 221. The end of the two flexible lumbar plates 21 away from each other are both fixedly connected to other rigid lumbar plates 22, these rigid lumbar plates 22 are further named as a lateral lumbar plate 222, and the two lateral lumbar plates 222 are disposed in laterally symmetric arrangement and are connected with the waist buckle assembly 23. The waist buckle assembly 23 specifically includes a tie 231 connected to the corresponding lateral lumbar plate 222, and the ends of the two ties 231 close to each other are provided with latches 232, to facilitate wearing and fixing of the waist bag 2. The tie 231 may be fixedly connected to the lateral lumbar plate 222. Alternatively, an elastic recoil deployment mechanism may be provided in the lateral lumbar plate 222, which is configured to release or roll the tie 231, so as to accommodating anthropometric variance in operator waist circumference. The latch 232 in the embodiment of the present application is a contralateral interlock structure, and other structures that accomplish the same purpose, such as magnetic clasps, belt buckles, etc. may be used.

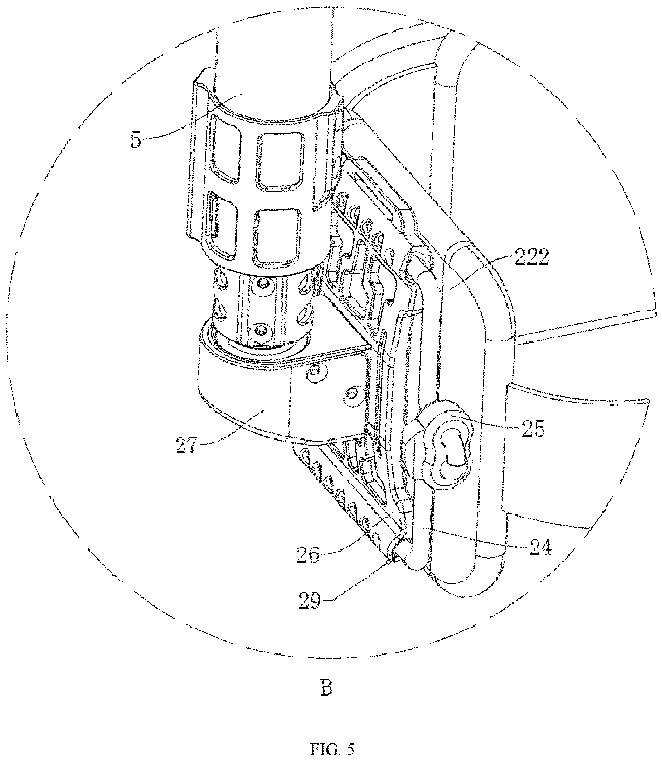

On this basis, referring to FIGS. 2 and 5, FIG. 5 is an enlarged schematic diagram of portion B of FIG. 2. Both the flexible lumbar plate 21 and the rigid lumbar plate 22 are provided with an elastic drawstring 24 through them, the drawstring 24 is a loop rope, i.e., a whole loop extends around the outer sides of the flexible lumbar plate 21 and the rigid lumbar plate 22. An end of the drawstring 24 located at the lateral lumbar plate 222 is assembled with a stop mechanism 25, and the stop mechanism 25 is used for preventing the drawstring 24 from rebounding to a natural elongation state. By the cooperation of the drawstring 24 and the stop mechanism 25, the waist bag 2 is further frapped and fixed to improve the wearing adaptability and comfort. In the embodiment of the present application, a lock is used as the stop mechanism 25, such as a snap lock, an elastic buckle or the like.

Referring again to FIGS. 3 and 5, a mounting plate 26 is fastened via bolts to the lateral lumbar plate 222, and a mounting head 27 is fastened via bolts to the mounting plate 26 at its middle. A ball bearing is provided in the mounting head 27, and the lower end of the upper-limb linkage assembly 5 is articulated with the mounting head 27 through the ball bearing. Furthermore, after the stop mechanism 25 locks the drawstring 24, the stop mechanism 25 at the end of the drawstring 24 may be snap-fitted with the mounting plate 26 to assist in preventing the drawstring 24 from rebound. Hereby the mounting plate 26 may be designed as a convex curved profile so as to interact with the stop mechanism 25.

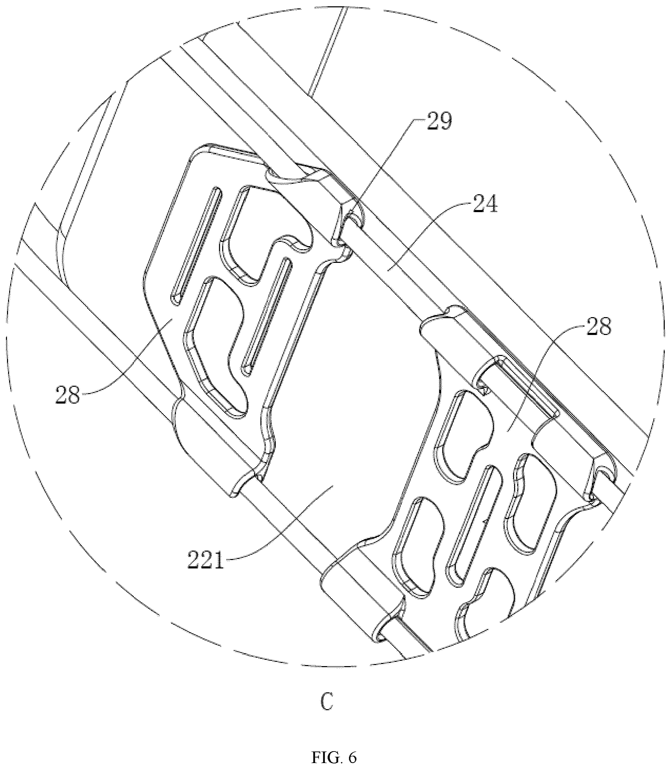

Referring to FIGS. 3 and 6, FIG. 6 is an enlarged schematic diagram of portion C of FIG. 3. In order to improve the stability of the drawstring 24 clinching the waist bag 2 and the convenience of adjusting the tightened state of the waist bag 2, the clamp plate 28 is securely installed via bolts and the like onto the posterior lumbar plate 222, and the upper and lower side edges of the clamp plate 28 are both formed with throughholes 29 for the drawstrings 24 to extend through, and the upper and lower side edges of the mounting plate 26 are also formed with throughholes 29 for the drawstring 24 to extend through. A plurality of clamp plates 28 may be securely installed onto the posterior lumbar plate 222 in the length direction thereof, and the plurality of clamp plates 28 cooperate with each other, so that the drawstrings 24 extend through them, to improve the clinching effect and the wearing stability.

When the operator needs to wear and remove the waist bag 2 or adjust the state such as tightness and inclination of the waist bag 2, the drawstrings 24 may be pulled to adjust the elastic deformation state of the flexible plates, then the drawstring 24 is locked by the stop mechanism 25, and the state of the waist bag 2 may be further adjusted or the waist bag 2 may be worn and removed in cooperation with the waist buckle assembly 23.

### Embodiment 2

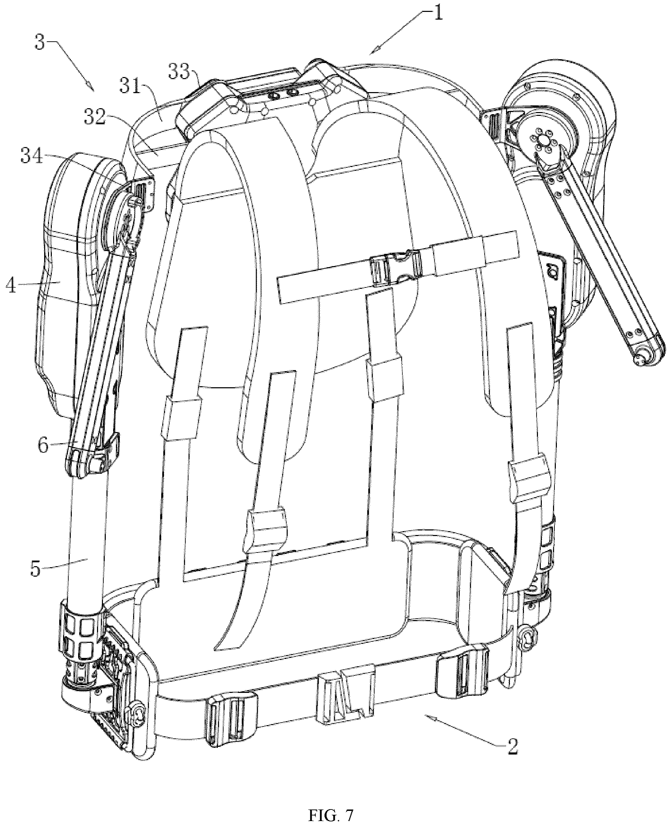

With reference to FIG. 7, FIG. 7 is a schematic diagram showing an overall structure of a wearable active powered upper-limb assistive device in Embodiment 2 of the present application. The present embodiment differs from Embodiment 1 in that in addition to the arc-shaped plate 31, the flexible plate module 3 further includes a straight plate 32 configured to be in cooperation with the arc-shaped plate 31. In the present embodiment, the straight plate 32 is configured to replace the restrictive plate 35 disclosed in Embodiment 1, and the straight plate 32 is also made of PU plastic. However, the straight plate 32 differs from the restrictive plate 35 in that the straight plate 32 is integrally formed with the flexible plate, and the connecting position of the straight plate 32 and the arc-shaped plate 31 is closer to the connecting position of the arc-shaped plate 31 and the torso exoskeletal frame 1, while the abutment position of the restrictive plate 35 against the arc-shaped plate 31 is closer to the connecting position of the arc-shaped plate 31 and the upper support arm 4.

The flexible plate module 3 integrally formed from the arc-shaped plate 31 and the straight plate 32 may also satisfy the requirements for improving the flexibility and adaptability of the upper support arm 4, and simultaneously contributes to limiting, providing auxiliary load support bearing and improving stability of the flexible connection. That is to say, although the straight plate 32 itself may satisfy the design requirements of angle adjustment through elastic deformation, the straight plate 32, limited by the connection position and connection mode between the straight plate 32 and the arc-shaped plate 31, in turn limits the degree of bending and twisting deformation of the arc-shaped plate 31 and improves the connection stability of the flexible connection structure.

### Embodiment 3

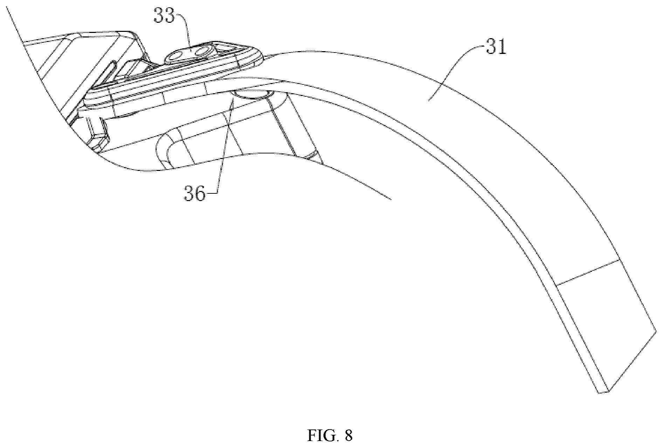

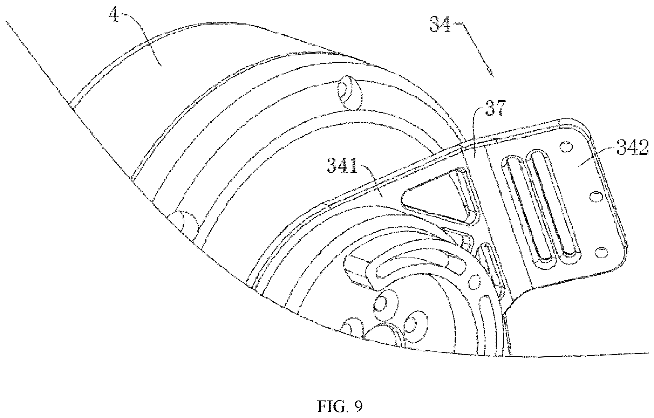

Referring to FIGS. 8 and 9, FIG. 8 is a schematic partial diagram mainly showing an motion clearance in Embodiment 3 of the present application, and FIG. 9 is a schematic partial diagram mainly showing a structure of a bendable plate in Embodiment 3 of the present application. The present embodiment differs from Embodiment 1 and Embodiment 2 in that the flexible plate module 3 has a different connection structure with the torso exoskeletal frame 1 and the upper support arm 4. In the present embodiment, the connection structure of the arc-shaped plate 31 and the torso exoskeletal frame 1 reserves a certain motion clearance, while the connection structure of the arc-shaped plate 31 and the upper support arm 4 also reserves a certain bending clearance.

Specifically, the holding component 33 in the present embodiment approximates an isosceles triangular plate. When the corresponding end of the arc-shaped plate 31 is pressed against the housing by the holding component 33, the holding component 33 does not achieve full surface contact, and a motion clearance 36 is reserved between the top corner of the holding component 33 and the housing below, by which the design of the motion clearance 36 does not affect the stability of the arc-shaped plate 31 when connected to the upper support arm 4, but may provide an appropriate degree of operational freedom. The adapter 34 in the embodiment of the present embodiment is fixedly connected to the first adapter plate 341 and the second adapter plate 342 by means of the bendable plate 37, and the bendable plate 37 itself permits deformation through flexure, and the bending clearance also does not affect the stability of the arc-shaped plate 31 when connected to the upper support arm 4, but may provide an appropriate degree of operational freedom.

By reserving operational freedom at the connection positions of two ends of the arc-shaped plate 31, it is possible to effectively balance the stiffness sensation potentially generated by the flexible connection structure and the movable support of the upper-limb linkage assembly 5. This solution is especially suited to the flexible plate module 3 in Embodiment 2.

### Embodiment 4

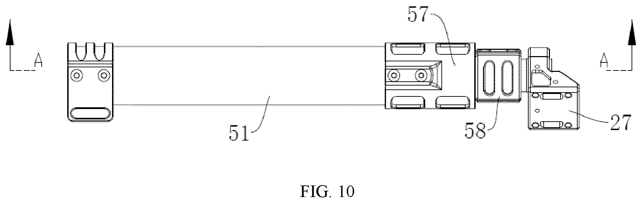

Referring to FIGS. 3 and 10, FIG. 10 is a schematic diagram mainly showing a connection structure of an upper-limb linkage assembly and a mounting head in Embodiment 4 of the present application. The present embodiment further optimizes the design of the lower end of the upper-limb linkage assembly 5 connected to the mounting head 27 on the basis of Embodiment 1. In the present embodiment, the upper-limb linkage assembly 5 includes a main rod 51 and an insertion rod 52 securely connected to the lower end of the main rod 51, the main rod 51 is fixedly connected to the upper support arm 4, and the lower end of the main rod 51 is articulated with the ball bearing in the mounting head 27 via the insertion rod 52.

Specifically, the upper end of the insertion rod 52 is coaxially inserted into the main rod 51 and is securely connected to the main rod 51, and the lower end of the insertion rod 52 is securely connected to the axle 53 of the ball bearing.

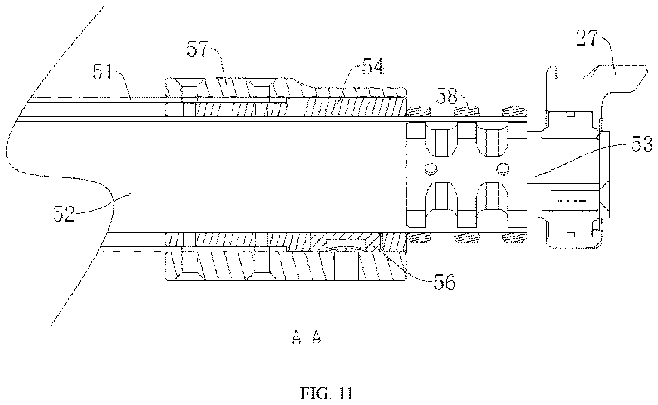

Referring to FIGS. 10 and 11, FIG. 11 is a cross-sectional view mainly showing a connection structure of the upper-limb linkage assembly and the mounting head in Embodiment 4 of the present application. The segment of the insertion rod 52 that extends beyond the lower end of the main rod 51 is sleeved with a locking sleeve 54. The locking sleeve 54 is of a stepped shaft sleeve structure, and a stepped shaft portion of the locking sleeve 54 forms a coaxial plug-in fit with the main rod 51 and fills a space between the insertion rod 52 and the main rod 51. A locking hole 55 is also formed in and passes through the curved surface of the locking sleeve 54, a locking block 56 is inserted into the locking hole 55, and a first retaining sleeve 57 is coaxially sleeved on the locking sleeve 54 and the main rod 51. The inner surface of the first retaining sleeve 57 is fit with the outer surface of the locking sleeve 54 and the outer surface of the main rod 51 while pressing against the locking block 56, and the pressed locking block 56 further presses the insertion rod 52. The first retaining sleeve 57, the main rod 51, and the insertion rod 52 are in threaded connection by screws, and the insertion rod 52, the locking block 56, and the first retaining sleeve 57 constitute an interference fit, so that the upper end of the insertion rod 52 is in a locked connection with the main rod 51.

The segment of the insertion rod 52 that extends beyond the lower end of the locking sleeve 54 is coaxially sleeved on the axle 53 of the ball bearing, the inner side surface of the insertion rod 52 is fit with the outer side surface of the axle 53 of the ball bearing, and the segment of the insertion rod 52 that extends beyond the lower end of the locking sleeve 54 is further sleeved with a second retaining sleeve 58. The second retaining sleeve 58, the insertion rod 52 and the axle 53 of the ball bearing are in threaded connection by screws, so that the lower end of the insertion rod 52 is securely connected with the axle 53 of the ball bearing.

The above describes preferred embodiments of the present application, which are not intended to limit the scope of protection of the present application. Therefore, any equivalent modifications made based on the structure, shape, or principles of the present application shall fall within the protection scope of the present application.

## Claims

1. A wearable active powered upper-limb assistive device, comprising a torso exoskeletal frame (1) configured to be worn by an operator, wherein the torso exoskeletal frame (1) is connected with an upper support arm (4), **characterized by** further comprising a waist bag (2) for the operator to wear around a waist, wherein the upper support arm (4) is flexibly connected to the torso exoskeletal frame (1), an upper-limb linkage assembly (5) is connected between the waist bag (2) and the upper support arm (4), and the upper support arm (4) is further drivingly coupled to an assistive lifting linkage assembly (6).

2. The wearable active powered upper-limb assistive device according to claim 1, **characterized in that** a drivingly coupling position of the assistive lifting linkage assembly (6) and the upper support arm (4) is adjacent to a flexible connection position of the upper support arm (4) and the torso exoskeletal frame (1).

3. The wearable active powered upper-limb assistive device according to claim 1, **characterized in that** a support-assist magnitude generated by the upper support arm (4) driving the assistive lifting linkage assembly (6) is adjustable.

4. The wearable active powered upper-limb assistive device according to claim 1, **characterized in that** the upper-limb linkage assembly (5) is fixedly connected to the upper support arm (4) to support the upper support arm (4), and the upper-limb linkage assembly (5) is articulated with the waist bag (2).

5. The wearable active powered upper-limb assistive device according to claim 4, **characterized in that** the upper-limb linkage assembly (5) is designed as a telescoping rod assembly with adjustable length.

6. The wearable active powered upper-limb assistive device according to claim 1, **characterized in that** the waist bag (2) comprises a flexible lumbar plate (21) and a rigid lumbar plate (22), wherein an elastic drawstring (24) extends through the flexible lumbar plate (21) and the rigid lumbar plate (22), and the elastic drawstring (24) is provided with a stop mechanism (25) for preventing the drawstring (24) from rebounding to a natural state.

7. The wearable active powered upper-limb assistive device according to claim 6, **characterized in that** a mounting plate (26) is detachably connected to the rigid lumbar plate (22), wherein the elastic drawstring (24) extends through the mounting plate (26), a mounting head (27) is detachably connected to the mounting plate (26), and the upper-limb linkage assembly (5) is articulated with the mounting head (27).

8. The wearable active powered upper-limb assistive device according to claim 7, **characterized in that** the stop mechanism (25) is designed as a lock connected to the elastic drawstring (24), wherein the mounting plate (26) is configured to prevent the stop mechanism (25) from moving along with the elastic drawstring (24) when the stop mechanism (25) limits the rebound of the elastic drawstring (24).

9. The wearable active powered upper-limb assistive device according to claim 6 or 7 or 8, **characterized in that** a plurality of clamp plates (28) are detachably connected to the rigid lumbar plate (22), wherein the plurality of clamp plates (28) cooperate with each other, so that the elastic drawstring (24) extends through the plurality of clamp plates.

10. The wearable active powered upper-limb assistive device according to claim 6, **characterized in that** the waist bag (2) further comprises a waist buckle assembly (23), wherein the waist buckle assembly (23) comprises a tie (231) connected to the rigid lumbar plate (22) and a latch (232) configured for connecting the tie (231).

11. The wearable active powered upper-limb assistive device according to claim 1, **characterized in that** a flexible plate module (3) is connected to the upper support arm (4) and the torso exoskeletal frame (1), wherein the flexible plate module (3) comprises an arc-shaped plate (31), the arc-shaped plate (31) is elastically bendable under an external force, a natural bending orientation of the arc-shaped plate (31) is an opening and closing direction of the upper support arm (4), an end of the arc-shaped plate (31) along its curvature is connected to the torso exoskeletal frame (1), and the other end of the arc-shaped plate (31) along its curvature is connected to the upper support arm (4).

12. The wearable active powered upper-limb assistive device according to claim 11, **characterized in that** a holding component (33) is detachably connected to the torso exoskeletal frame (1), wherein the holding component (33) is configured to press and fix the arc-shaped plate (31) against the torso exoskeletal frame (1).

13. The wearable active powered upper-limb assistive device according to claim 11 or 12, **characterized in that** an adapter (34) is detachably connected to the upper support arm (4), wherein the adapter (34) comprises a first adapter plate (341) detachably connected to the upper support arm (4) and a second adapter plate (342) detachably connected to the arc-shaped plate (31), and the first adapter plate (341) is angled to the second adapter plate (342).

14. The wearable active powered upper-limb assistive device according to claim 11, **characterized in that** the flexible plate module (3) further comprises a straight plate (32), wherein the straight plate (32) is connected to the torso exoskeletal frame (1) and is integrally formed on an inner curved surface of the arc-shaped plate (31).

15. The wearable active powered upper-limb assistive device according to claim 4, **characterized in that** the upper-limb linkage assembly (5) comprises a main rod (51), wherein an insertion rod (52) is inserted into the main rod (51), the insertion rod (52) is articulated with the waist bag (2), and the insertion rod (52) is in an interference fit and securely connected with the main rod (51).
